(19) **Europäisches Patentamt**

**European Patent Office**

**Office européen des brevets**

(11) **EP 0 912 838 B1**

(12) **EUROPÄISCHE PATENTSCHRIFT**

(45) Veröffentlichungstag und Bekanntmachung des Hinweises auf die Patenterteilung:
**05.06.2002 Patentblatt 2002/23**

(51) Int Cl.7: **F16D 48/06**

(21) Anmeldenummer: **97931746.8**

(86) Internationale Anmeldenummer:
**PCT/EP97/03485**

(22) Anmeldetag: **02.07.1997**

(87) Internationale Veröffentlichungsnummer:
**WO 98/03800 (29.01.1998 Gazette 1998/04)**

(54) **AUTOMATISCH GESTEUERTE KUPPLUNG**

AUTOMATIC CLUTCH

EMBRAYAGE A COMMANDE AUTOMATIQUE

(84) Benannte Vertragsstaaten:
**DE FR GB IT**

(30) Priorität: **17.07.1996 DE 19628789**

(43) Veröffentlichungstag der Anmeldung:
**06.05.1999 Patentblatt 1999/18**

(73) Patentinhaber:
• **DaimlerChrysler AG**
**70546 Stuttgart (DE)**
• **LuK Lamellen und Kupplungsbau Beteiligungs KG**
**77813 Bühl (DE)**

(72) Erfinder:
• **KOSIK, Franz**
**D-73760 Ostfildern (DE)**
• **GRASS, Thomas**
**D-73660 Urbach (DE)**

(56) Entgegenhaltungen:
**EP-A- 0 137 247      EP-A- 0 494 608**
**WO-A-90/05866**

**Beschreibung**

Die Erfindung betrifft ein Verfahren zur Steuerung einer automatischen Kupplung zwischen einem Motor und einem Antriebstrang eines Kraftfahrzeuges, mit einer Überwachungseinrichtung, welche Drehzahldifferenzen zwischen Kupplungeingang und Kupplungsausgang registriert, wobei die genannten Drehzahldifferenzen aus Signalen einer ersten Drehzahlmesseranordnung am Eingang der Kupplung bzw. am mit dem Eingang drehfest verbundenen Fahrzeugmotor sowie Signalen einer ausgangsseitig der Kupplung angeordneten weiteren Drehzahlmesseranordnung unter Ausblendung von Drehzahlschwankungen, deren Frequenz einer Eigenfrequenz des Antriebstranges entspricht, ermittelt werden.

Kraftfahrzeuge mit manuell geschalteten Getrieben und automatische gesteuerter Kupplung sind grundsätzlich bekannt.

Bei der Steuerung der automatischen Kupplung sowie bei deren Überwachung ist es prinzipiell erwünscht, Drehzahldifferenzen zwischen Kupplungseingang und Kupplungsausgang zu erkennen. Damit wird es einerseits erleichtert, ruckfrei ein- und auszukuppeln. Andererseits kann auch die thermische Belastung der automatischen Kupplung ohne Temperaturmessung erfaßt werden, indem eine Rechnersimulation durchgeführt wird, bei der aus der Drehzahldifferenz, aus dem jeweils übertragenen und mittels entsprechender Sensoren erfaßten Kupplungsmoment sowie aus dem zeitlichen Verlauf von Drehzahldifferenz und Kupplungsmoment die Temperaturverhältnisse an der Kupplung errechnet werden. Hierbei wird ausgenutzt, daß die an der Kupplung auftretenden thermischen Verlustleistungen proportional dem Produkt aus Kupplungsmoment und Drehzahldifferenz sind.

Aus der EP 0 494 608 A2 ist eine automatisch gesteuerte Kupplung der eingangs angegebenen Art bekannt. Dabei werden zur Ausblendung der Eigenfrequenz von Rupfschwingungen, die beim Schließen der Kupplung im Antriebstrang auftreten, Filter eingesetzt, um die Kupplungssteuerung zu vereinfachen.

Hinsichtlich des allgemeinen technologischen Hintergrundes kann noch auf die EP 0 137 247 A2 sowie die WO 90/05866 verwiesen werden. Die erstgenannte Druckschrift zeigt, wie eine Überhitzung einer Kupplung vermieden werden kann. Die zweitgenannte Druckschrift zeigt, daß Drehzahlmessereinrichtungen auch ausgangsseitig eines Getriebes vorhanden sein können, welches zwischen Kupplung und Antriebsrädern eines Fahrzeuges angeordnet ist.

Aufgabe der Erfindung ist es nun, einen Gleichlauf von Kupplungseingang und -ausgang mit geringem meßtechnischen Aufwand zu erfassen.

Diese Aufgabe wird bei dem eingangs angegebenen Verfahren zur Steuerung einer automatischen Kupplung erfindungsgemäß dadurch gelöst, daß die weitere Drehzahlmesseranordnung die Drehzahlen von Fahrzeugantriebsrädern erfaßt und die Drehzahldifferenzen zwischen Kupplungseingang und -ausgang unter Berücksichtigung der jeweiligen Übersetzung bzw. Stufe eines Getriebes zwischen Kupplung und Antriebsrädern sowie unter Ausblendung einer bei geschlossener Kupplung auftretenden Eigenfrequenz des Antriebstranges ermittelt werden.

Die Erfindung beruht auf dem allgemeinen Gedanken, zur Ermittlung der Drehzahldifferenzen zwischen Kupplungseingang und Kupplungsausgang solche Drehzahlmesseranordnungen heranzuziehen, die ohnehin im Fahrzeug vorhanden sein müssen. Die erste Drehzahlmesseranordnung wird bei modernen, mit dem Ziel einer Minimierung schädlicher Abgase gesteuerten Verbrennungsmotoren von Kraftfahrzeugen benötigt. Die zweite Drehzahlmesseranordnung wird regelmäßig für Bremssysteme des Fahrzeuges mit Antiblockiersteuerung (ABS) benötigt. Die Übersetzungsverhältnisse zwischen den Drehzahlen von Kupplungsausgang und Antriebsrädern sind konstruktiv vorgegeben. Gegebenenfalls muß lediglich erfaßt werden, welche Getriebestufe bzw. welcher Gang eingelegt sind. Dies ist für eine optimale Steuerung des Kupplungsmomentes beim Ein- bzw. Auskuppeln ohnehin notwendig oder wünschenswert.

Darüber hinaus berücksichtigt die Erfindung die Erkenntnis, daß im Antriebstrang bei geschlossener Kupplung charakteristische Ruckelschwingungen auftreten, mit der Folge, daß das Verhältnis zwischen den Drehzahlen des Fahrzeugmotors und den Drehzahlen der Antriebsräder des Fahrzeuges mit einer charakteristischen Frequenz - beispielsweise 4 bis 5 Hz - schwankt. Die Frequenz dieser bei geschlossener Kupplung auftretenden Ruckelschwingungen ist deutlich niedriger als die Frequenz von Rupfschwingungen, wie sie beim Ein- oder Auskuppeln auftreten können, wenn die Kupplung noch schleift, d.h. das Kupplungsmoment noch geringer ist als das zwischen Fahrzeugmotor und Antriebstrang wirksame Moment. Die Rupfschwingungen haben gegenüber den Ruckelschwingungen deshalb eine deutlich höhere, etwa um den Faktor 2 erhöhte Frequenz, weil aufgrund der noch nicht geschlossenen Kupplung die Trägheitsmomente des Motors nicht frequenzbestimmend für die Rupfschwingungen im Antriebstrang sein können.

Indem bei der Erfindung die Ruckelschwingungen bei der Auswertung der Drehzahldifferenzen zwischen Motor und Antriebsrädern "ausgeblendet" werden, wird verhindert, daß aus entsprechenden Schwankungen der Drehzahlen von Motor und Antriebsrädern eine analog schwankende Drehzahldifferenz zwischen Kupplungseingang und Kupplungsausgang und damit fälschlich ein Zustand schleifender Kupplung ermittelt werden.

Im Ergebnis bietet die Erfindung auch bei ausgeprägt elastisch-nachgiebigen Antriebsträngen die Möglichkeit, aus den Signalen für die Motordrehzahl sowie die Raddrehzahl in einer durch Ruckelschwingungen unverfälschten Weise auf Drehzahldifferenzen zwischen Kupplungseingang und Kupplungsausgang zu schließen.

Auf diese Weise kann gegebenenfalls ohne Störung durch Rukkelschwingungen die Funktion eines das Kupplungsmoment erfassenden Sensors überprüft werden, indem erfaßt wird, ob gleichzeitig verschwindende Drehzahldifferenzen zwischen Kupplungseingang und Kupplungsausgang und ein hinreichend großes Kupplungsmoment, bei dem die Kupplung ohne Schlupf arbeiten müßte, vorliegen.

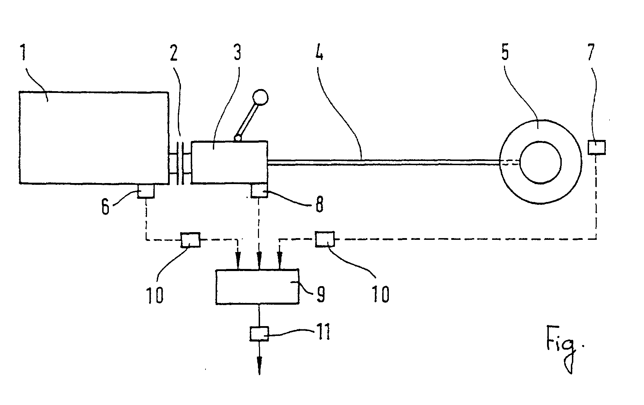

Im übrigen wird hinsichtlich bevorzugter Merkmale der Erfindung auf die Ansprüche sowie die nachfolgende Erläuterung der Zeichnung verwiesen, anhand der eine besonders vorteilhafte Ausführungsform beschrieben wird.

Dabei zeigt die einzige Figur eine schematisierte Darstellung eines Antriebstranges sowie eines zugehörigen Motors eines Kraftfahrzeuges.

Ein grundsätzlich herkömmlicher Verbrennungsmotor 1, welcher zum Antrieb eines nicht näher dargestellten Kraftfahrzeuges dient, ist über eine automatisch gesteuerte Kupplung 2 sowie ein manuell geschaltetes Getriebe 3 und eine Antriebswelle 4 (Kardanwelle) antriebsmäßig mit Antriebsrädern 5 verbindbar.

Dem Motor 1 ist eine erste Drehmesseranordnung 6 und den Antriebsrädern 5 eine zweite Drehzahlmesseranordnung 7 zugeordnet. Durch einen Sensor 8 am Getriebe 3 wird die jeweils eingelegte Getriebestufe und damit das (rechnerische) Übersetzungsverhältnis zwischen Ausgang der Kupplung 2 und den Antriebsrädern 5 erfaßt.

Aufgrund der typischerweise drehfesten Antriebsverbindung zwischen Motor 1 und Eingang der Kupplung 2 entspricht die Motordrehzahl umkehrbar eindeutig der Drehzahl des Kupplungseinganges. Die Signale der Drehzahlmesseranordnung 6 zeigen somit auch die Drehzahl des Eingangs der Kupplung 2.

Aus den von der Drehzahlmesseranordnung 7 ermittelten Raddrehzahlen kann die Drehzahl des Ausgangs der Kupplung 2 nur bei geöffneter Kupplung exakt ermittelt werden, vorausgesetzt, daß die jeweilig durch den Sensor 8 ermittelte eingelegte Getriebsstufe bzw. das damit vorgegebene Übersetzungsverhältnis zwischen Ausgang der Kupplung 2 und Antriebsrädern 5 berücksichtigt wird. Sobald die Kupplung 2 geschlossen ist und der Antriebstrang zwischen Getriebe 3 und Antriebsrädern 5 von größeren übertragenen Drehmomenten beansprucht wird, können aufgrund konstruktiv vorgegebener und in Regel auch erwünschter größerer Elastizitäten des Antriebstranges größere Differenzen zwischen den tatsächlichen Drehzahlen des Ausganges der Kupplung 2 und den aufgrund der Drehzahlen der Antriebsräder 5 rechnerisch ermittelten Drehzahlen des Kupplungsausganges auftreten, da der Antriebstrang stark tordiert werden kann.

Diese Differenzen zwischen berechneter und tatsächlicher Drehzahl des Kupplungsausganges schwanken bei geschlossener Kupplung 2 mit einer charakteristischen Ruckelfrequenz, welche durch die jeweiligen Bemessungen des Antriebstranges bzw. des Fahrzeuges sowie des Motors vorgegeben ist und beispielsweise bei ca. 4 Hz liegt.

Wenn nun verhindert wird, daß die durch derartige Ruckelschwingungen verursachten Drehbewegungen der Antriebsräder 5 relativ zum Ausgang der Kupplung 2 auf den Wert der ermittelten Drehzahldifferenz zwischen Eingang und Ausgang der Kupplung 2 zurückwirken, können die tatsächlichen Drehzahldifferenzen zwischen Eingang und Ausgang der Kupplung 2 aus den Drehzahlen des Motors 1 und der Antriebsräder 5 hinreichend genau bestimmt werden.

Hierzu ist erfindungsgemäß vorgesehen, daß ein Rechner 9 zunächst aus den Signalen der Drehzahlmesseranordnung 6 einen Wert für die Drehzahlen des Eingangs der Kupplung 2 und aus den Signalen der Drehzahlmesseranordnung 7 und des Sensors 8 einen Wert für die Drehzahlen des Ausganges der Kupplung 2 ermittelt, als ob durch die jeweils eingelegte Getriebestufe immer ein festes Drehzahlverhältnis zwischen Ausgang der Kupplung 2 und Antriebsrädern 5 gegeben wäre. Aus diesen Drehzahlwerten wird eine Differenz ermittelt, wobei Schwankungen des Wertes der Differenz mit der für Ruckelschwingungen des Antriebstranges charakteristischen Frequenz eleminiert werden können.

Dies kann beispielsweise dadurch erfolgen, daß der Rechner überprüft, ob das Vorzeichen der ermittelten Differenz ständig ein einer aufgrund der Rukkelfrequenz zu erwartenden Häufigkeit wechselt, bzw. ob der Wert der ermittelten Drehzahldifferenz mit einer aufgrund der Ruckelfrequenz zu erwartenden Häufigkeit den Wert 0 durchläuft. Falls die Ruckelfrequenz den Wert $f_R$ hat, gilt für die Anzahl A der Vorzeichenwechsel bzw. der Nulldurchgänge innerhalb eines Zeitinvervalles t:

$$A = 2f_R t.$$

Statt dessen ist es auch möglich und vorteilhaft, zwischen dem Rechner 9 und die Drehzahlmesseranordnungen 6 und 7 jeweils Filter 10 zu schalten, die für ein schmales Frequenzband in der Umgebung der Ruckelfrequenz undurchlässig sind. Im Ergebnis erhält damit der Rechner 9 nur solche Drehzahlsignale, die gegenüber Signalschwankungen mit der Ruckelfrequenz bereinigt sind.

Grundsätzlich ist es auch möglich, anstelle der eingangsseitig des Rechners 9 angeordneten Filter 10 ausgangsseitig des Rechners 9 ein Filter 11 anzuordnen, welches ebenfalls für Signalschwankungen mit der Ruckelfrequenz undurchlässig ist. Damit wird errreicht, daß ausgangsseitig des Filters 11 nur noch solche Signale vorliegen, die von Schwankungen mit der Ruckelfrequenz bereinigte Drehzahldifferenzen darstellen.

Die Frequenz der Ruckelschwingungen ändert sich geringfügig mit der Beladung des Fahrzeuges. Deshalb muß bei der Bemessung der Filter 10 bzw. 11 ein entsprechendes Frequenzband berücksichtigt werden, innerhalb dessen die Filter undurchlässig sind. In entsprechender Weise muß auch bei Ermittlung der Anzahl A der Vorzeichenwechsel bzw. der Nulldurchgänge ein Frequenzband berücksichtigt werden.

Bei Fahrzuständen, bei denen von einer geschlossenen Kupplung 2 ausgegangen werden kann, kann die jeweilige Frequenz der Ruckelschwingungen sehr exakt bestimmt werden, so daß das Frequenzband bereits nach kürzerer Fahrstrecke nach einem Start des Fahrzeuges adaptiv auf den gemessenen Wert der Ruckelfrequenz eingrenzbar ist.

**Patentansprüche**

1. Verfahren zur Steuerung einer automatischen Kupplung (2) zwischen einem Motor (1) und einem Antriebsstrang (3,4,5) eines Kraftfahrzeuges, mit einer Überwachungseinrichtung (6,7,8,9), welche Drehzahldifferenzen zwischen Kupplungseingang und Kupplungsausgang registriert, wobei die genannten Drehzahldifferenzen aus Signalen einer ersten Drehzahlmesseranordnung (6) am Eingang der Kupplung (2) bzw. am mit dem Eingang drehfest verbundenen Fahrzeugmotor (1) sowie Signalen einer ausgangsseitig der Kupplung (2) angeordneten weiteren Drehzahlmesseranordnung (7) unter Ausblendung von Drehzahlschwankungen, deren Frequenz einer Eigenfrequenz des Antriebstranges (3,4,5) entspricht, ermittelt werden,
   **dadurch gekennzeichnet,**
   **daß** die weitere Drehzahlmesseranordnung (7) die Drehzahlen von Fahrzeugantriebsrädern (5) erfaßt und die Drehzahldifferenzen zwischen Kupplungseingang und -ausgang unter Berücksichtigung des jeweiligen Übersetzung bzw. Stufe eines Getriebes (3) zwischen Kupplung (2) und Antriebsrädern (5) sowie unter Ausblendung einer bei geschlossener Kupplung (2) auftretenden Eigenfrequenz des Antriebstranges (3,4,5) ermittelt werden.

2. Verfahren nach Anspruch 1,
   **dadurch gekennzeichnet,**
   **daß** auf eine verschwindende Drehzahldifferenz zwischen Kupplungseingang und Kupplungsausgang geschlossen wird, wenn die Differenz zwischen einem aus den Signalen der ersten Drehzahlmesseranordnung (6) ermittelten Wert für die eingangsseitige Drehzahl an der Kupplung (2) und einem aus den Signalen der zweiten Drehzahlmesseranordnung (7) sowie der jeweiligen Übersetzung ermittelten Wert für die ausgangsseitige Drehzahl an der Kupplung (2) mit einer bei Schwingungen mit der vorgenannten Eigenfrequenz zu erwartenden Häufigkeit ihr Vorzeichen wechselt und/oder den Wert "0" durchläuft.

3. Verfahren nach Anspruch 1,
   **dadurch gekennzeichnet,**
   **daß** zumindest ein Filter (10,11) vorhanden ist, welches für Signalschwankungen mit der vorgenannten Eigenfrequenz undurchlässig ist und eingangsseitig und/oder ausgangsseitig eines mit den Drehzahlmesseranordnungen (6,7) zusammenwirkenden Rechners (9) angeordnet ist.

**Claims**

1. Method of controlling an automatic clutch (2) between an engine (1) and a drive train (3, 4, 5) of a motor vehicle with a monitoring device (6, 7, 8, 9) which registers speed differences between clutch input and clutch output, wherein the cited speed differences are established from signals of a first speed measurement arrangement (6) at the input of the clutch (2) / on the vehicle engine (1) connected in a rotationally secure way with the input as well as signals of a further speed measurement arrangement (7) arranged at the output side of the clutch (2), with the fading down of speed fluctuations, of which the frequency corresponds to an individual frequency of the drive train (3, 4, 5)
   **characterised in that**
   the further speed measurement arrangement (7) records the speeds of vehicle drive wheels (5) and the speed differences between clutch input and output taking into consideration the respective gear ratio / stage of a transmission (3) between clutch (2) and drive wheels (5) as well as with fading down of an individual frequency of the drive train (3, 4, 5) arising when the clutch (2) is closed.

2. Method according to claim 1
   **characterised in that**
   a disappearing speed difference between clutch input and clutch output is concluded if the difference between a vaule for the input side speed at the clutch (2) determined from the signals of the first speed measurement arrangement (6) and a value for the output side speed on the clutch (2) determined from the signals of the second speed measurement arrangement (7) as well as the respective gear ratio changes its digit with the frequency to be expected with fluctuations with the pre-cited individual frequency and/or runs through the value "0".

3. Method according to claim 1
   **characterised in that**
   at least one filter (10, 11) is present which for signal fluctuations with the pre-cited individual frequency cannot be passed through and is arranged on the input side and/or on the output side of a computer (9) working in association with the speed measurement arrangements (6, 7).

## Revendications

1. Procédé de commande d'un embrayage automatique (2) entre un moteur (1) et une chaîne de transmission (3, 4, 5) d'un véhicule, avec un dispositif de contrôle (6, 7, 8, 9), qui enregistre des différences de vitesse de rotation entre l'entrée et la sortie de l'embrayage, les différences de vitesse de rotation précipitée étant détectées à partir de signaux d'un premier dispositif de mesure de vitesse de rotation (6) à l'entrée de l'embrayage (2) ou au moteur (1) du véhicule solidaire en rotation de l'entrée, ainsi qu'à partir de signaux d'un autre dispositif de mesure de vitesse de rotation (7) disposé à la sortie de l'embrayage (2) avec suppression d'oscillations de vitesse de rotation, dont la fréquence correspond à une fréquence propre de la chaîne de transmission (3, 4, 5),

   **caractérisé en ce que**

   l'autre dispositif de mesure de vitesse de rotation (7) détecte les vitesses de rotation des roues motrices du véhicule (5) et les différences de vitesse de rotation entre l'entrée et la sortie de l'embrayage sont détectées en tenant compte de la démultiplication respective ou de la vitesse d'une boîte de vitesses (3) entre l'embrayage (2) et les roues motrices (5) ainsi que par suppression d'une fréquence propre de la chaîne de transmission (3, 4, 5) apparaissant lors de l'engagement de l'embrayage (2).

2. Procédé selon la revendication 1, **caractérisé en ce qu'**on conclut à une différence de vitesse de rotation disparaissant entre l'entrée de l'embrayage et la sortie de l'embrayage, lorsque la différence entre une valeur déterminée à partir des signaux du premier dispositif de mesure de vitesse de rotation (6) pour la vitesse de rotation côté entrée de l'embrayage (2) et une valeur déterminée à partir des signaux du second dispositif de mesure de vitesse de rotation (7) ainsi que de la démultiplication respective pour la vitesse de rotation côté sortie de l'embrayage (2) modifie son signe et/ou passe par la valeur "0" à une fréquence escomptée lors d'oscillations à la fréquence propre précitée.

3. Procédé selon la revendication 1, **caractérisé en ce qu'**au moins un filtre (10, 11) est prévu, qui élimine des oscillations de signaux à la fréquence propre précipitée et est disposé côté entrée et/ou côté sortie d'un calculateur (9) coopérant avec les dispositifs de mesure de vitesse de rotation (6, 7).

Fig.